# EUROPÄISCHE PATENTSCHRIFT

(11) **EP 0 792 301 B1**
(45) Veröffentlichungstag und Bekanntmachung des Hinweises auf die Patenterteilung: **14.10.1998**
(21) Anmeldenummer: 95940175.3
(22) Anmeldetag: 14.11.1995
(51) Int. Cl.: C08F 265/04, C08L 51/00

(54) **VERFAHREN ZUR HERSTELLUNG VON KAUTSCHUKMODIFIZIERTEN FORMMASSEN AUS DERIVATE VON ACRYLAMIDEN ODER -METHACRYLAMIDEN ENTHALTENDEN REAKTIONSGEMISCHEN**
PROCESS FOR PRODUCING MODIFIED RUBBER MOULDING MATERIALS FROM REACTION MIXTURES CONTAINING DERIVATIVES OF ACRYLAMIDES OR METHACRYLAMIDES
PROCEDE DE PRODUCTION DE MATIERES MOULABLES EN CAOUTCHOUC MODIFIE A PARTIR DE MELANGES DE REACTION CONTENANT DES DERIVES D'ACRYLAMIDES OU DE METHACRYLAMIDES

(30) Priorität: 14.11.1994 DE 4440673
(43) Veröffentlichungstag der Anmeldung: 03.09.1997
(73) Patentinhaber: BASF AKTIENGESELLSCHAFT, 67056 Ludwigshafen (DE)
(72) Erfinder: MC KEE, Graham, Edmund, D-67433 Neustadt (DE); GAUSEPOHL, Hermann, D-67112 Mutterstadt (DE); ROSENAU, Bernhard, D-67434 Neustadt (DE); HECKMANN, Walter, D-69469 Weinheim (DE)
(74) Vertreter: Isenbruck, Günter, Dr.
(86) Internationale Anmeldenummer: EP9504477
(87) Internationale Veröffentlichungsnummer: WO9615168

(56) Entgegenhaltungen:
- FR-A- 2 139 162
- FR-A- 2 328 004
- DATABASE WPI Week 7537 Derwent Publications Ltd., London, GB; AN 75-61226w & JP,A,50 053 492 (SEITETSU CHEM IND SHIN) , 12.Mai 1975

## Beschreibung

Die Erfindung betrifft ein Verfahren zur Herstellung von kautschukmodifizierten Formmassen und nach dem Verfahren hergestellte kautschukmodifizierte Formmassen, wobei in dem Verfahren Derivate von Acrylamiden oder -methacrylamiden verwendet werden.

Kautschukmodifizierte Formmassen sind Massen, bei denen Domänen von Elastomeren, z.B. Kautschuken, in eine Matrix aus einem Thermoplasten eingebettet sind. Es besteht ein großer Bedarf an kautschukmodifizierten Formmassen, die Oberflächenglanz, Schlagzähigkeit und Reißfestigkeit aufweisen. Dabei ist die charakteristische Domänenstruktur für die erwünschten mechanischen Eigenschaften verantwortlich.

Die Mehrphasigkeit und damit auch die Domänenstruktur von kautschukmodifizierten Formmassen beruht darauf, daß diese aus verschiedenen Polymerkomponenten aufgebaut sind, die nicht oder nur teilweise miteinander mischbar sind. Die Schlagzähigkeit derselben resultiert aus einer erhöhten Energieaufnahme bei der Deformation bis zum Bruch. Die Energie wird dabei zur Bildung von Mikrohohlräumen oder zur Einleitung von Abgleitvorgängen der Matrixpolymerketten verbraucht. Die Mehrphasigkeit ist deshalb eine notwendige Voraussetzung für das Erreichen hoher Schlagzähigkeiten.

Im übrigen gilt folgendes:
1. Die zwei chemisch verschiedenen Polymerkomponenten bilden eine stabile Dispersion mit definierter Teilchengröße, die im Bereich der thermoplastischen Schmelze (Verarbeitung) weder Phasenseparation zeigt, noch bei intensiverer Temperatureinwirkung zur Homogenisierung unter Bildung einer makromolekularen Lösung neigt.
2. Zwischen den Elastomerpartikeln und der Matrix muß eine Kopplung bestehen, d. h. an den Phasengrenzflächen müssen Kräfte übertragen werden können.

Die wirkungsvollste Phasenkopplung an den Grenzflächen der Elastomerteilchen wird durch Pfropfcopolymerisation erreicht. Z.B. wird bei der Herstellung von Acrylnitril-Styrol-Acrylat-(ASA)-Formmassen in der Regel so verfahren, daß ein Acrylat-Kautschuk vorgelegt wird, auf den anschließend durch Polymerisation mit einem Monomerengemisch aus Styrol und Acrylnitril Copolymere auf der Basis der beiden letzteren Monomeren aufgepfropft werden.

Die Herstellung von ASA-Formmassen in Emulsion ist zum Beispiel beschrieben in DE 32 06 136, 31 49 046, 31 49 358, 32 27 555, 31 29 378, 31 29 472, 29 40 804, 28 26 925 und 19 11 882. Dabei wird der Kautschuk aus n-Butylacrylat und geringen Mengen an zwei Doppelbindungen enthaltenden Monomeren in Emulsion hergestellt. Die nach dem Verfahren hergestellten Formmassen weisen aber eine nicht für alle Anwendungen ausreichende Schlagzähigkeit, Steifigkeit und Reißfestigkeit auf, und der Glanz der daraus hergestellten Formkörper ist nicht über eine breite Skala variierbar.

Die Emulsionspolymerisation von Styrol-Acrylnitril im Gegenwart eines Kautschuks, der Monomereinheiten aus Derivaten von Acrylamiden oder Methacrylamiden enthält, wird in DE 21 26 151 beschrieben.

Aus diesen Gründen werden die Formmassen am vorteilhaftesten in Lösung hergestellt. Solche Verfahren sind in EP 0 095 919 und DE 11 82 811 beschrieben.

Nach EP 0 095 919 findet keine Pfropfung der Comonomeren auf den Kautschuk, d.h. keine wirksame Kopplung an der Grenzfläche, statt. Gemäß DE wird der Kautschuk aus n-Butylacrylat mit 0,5 bis 10 Gew.- % eines Comonomeren mit zwei radikalisch polymerisierbaren Doppelbindungen hergestellt. Die Polymerisation des Styrol-Acrylnitril (SAN)-Monomerengemisches wird bei einem Kautschukumsatz von 10 bis 80 % gestartet. Dies hat zur Folge, daß der gepfropfte Anteil des Kautschuks nicht die gleiche Zusammensetzung wie die Polymermatrix besitzt, was zu schlechteren mechanischen Eigenschaften der Formmassen führt. Weiterhin führt die Einpolymerisation von Kautschukeinheiten in die Pfropfhülle, d. h. die Pfropfäste, zu einer Herabsetzung der Vicaterweichungstemperatur der Produkte.

Der Erfindung liegt demnach die Aufgabe zugrunde, ein Verfahren zur Herstellung von kautschukmodifizierten Formmassen mit verbesserten mechanischen Eigenschaften, insbesondere erhöhter Schlagzähigkeit, Kerbschlagzähigkeit und Lochkerbschlagzähigkeit, zu schaffen.

Diese Aufgabe wird durch das erfindungsgemäße Verfahren gelöst, bei dem in einer ersten Stufe ein erstes Gemisch (A), das zumindest ein Alkylacrylat oder -methacrylat (a) der allgemeinen Formel (I) 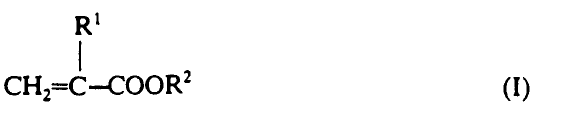 in der R¹ ein Wasserstoffatom oder eine Methylgruppe und R² eine Alkylgruppe mit 1 bis 32 Kohlenstoff-Atomen bedeutet, eine Verbindung (b) der allgemeinen Formel (II) 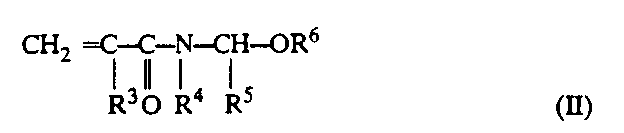 in der R³ ein Wasserstoffatom oder eine Methylgruppe, R⁴ ein Wasserstoffatom oder eine Alkylgruppe mit 1 bis 8 Kohlenstoff-Atomen, R⁵ ein Wasserstoffatom oder eine Methylgruppe und R⁶ ein Wasserstoffatom, eine Alkylgruppe mit 1 bis 10 Kohlenstoff-Atomen bedeutet, und ggf. ein erstes Monomeres (c) oder mehrere enthält, mit freien Radikalen zu einem Kautschuk (B), vorzugsweise in Lösung, polymerisiert wird,
in einer zweiten Stufe der entstandene. Kautschuk (B) zur Bildung eines zweiten Gemisches (C) mit einem zweiten oder mehreren Monomeren (d) vermischt und in diesem gelöst oder gequollen wird und
in einer dritten Stufe das nach dem Vermischen gebildete zweite Gemisch (C) mit freien Radikalen zu der kautschukmodifizierten Formmasse (D) polymerisiert wird.

Gegebenenfalls kann in der zweiten Stufe zusätzlich ein Lösungsmittel zugegeben werden.

Die Herstellung einer verbesserten kautschukmodifizierten Formmasse durch das erfindungsgemäße Verfahren beruht darauf, daß in der ersten Stufe das Acrylat oder -methacrylat mit einem Acrylamid oder -methacrylamid der allgemeinen Formel (II) copolymerisiert wird. Dabei tritt im Laufe der Copolymerisation eine Vernetzung ein, bei der die Kautschukmoleküle über die folgende Struktur (III) verbunden werden: 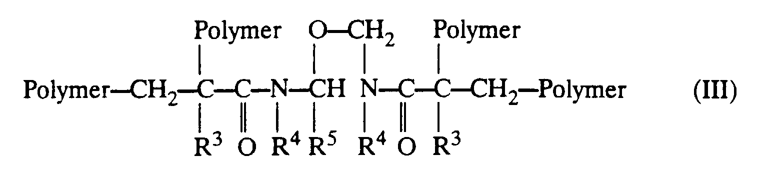 in der R³, R⁴ und R⁵ die gleiche Bedeutung wie oben besitzen.

In der dritten Stufe findet dabei eine Pfropfcopolymerisation statt, wobei das Rückgrat des entstehenden Pfropfcopolymeren von dem Kautschuk (B) gebildet wird und die Pfropfäste aus dem zweiten Monomeren (d) aufgebaut sind. Weil keine 100%ige Pfropfung stattfindet, bleibt ein Teil des Kautschuks ungepfropft und es wird gleichzeitig ein Kettenpolymeres aus dem dritten Monomeren (d) gebildet, so daß in der Formmasse drei Arten von Molekülen vorliegen, nämlich Moleküle des Kautschuks (B), des Polymeren von (d) und des mit (d) gepfropften Kautschuks (B).

Beispiele für Alkylgruppen mit 1 bis 32 Kohlenstoffatomen sind die Methyl-, Ethyl-, n-Propyl-, iso-Propyl-, n-Butyl-, iso-Butyl-, tert.-Butyl-, n-Pentyl-, iso-Pentyl-, n-Hexyl-, n-Heptyl-, n-Octyl-, Ethylhexyl-, n-Nonyl-, n-Decyl-, n-Dodecyl-, n-Tetradecyl-, n-Hexadecyl-, n-Octadecyl-, n-Eicosyl-, n-Docosyl-, n-Tetracosyl-, n-Hexacosyl-, n-Octacosyl-, n-Triacontyl-, n-Hentriacontyl- und Dotriacontyl-Gruppe.

Beispiele für Carboxylatgruppen mit 1 bis 10 Kohlenstoffatomen sind die Formyl-, Acetyl-, n-Propionyl-, iso-Propionyl-, n-Butanoyl-, iso-Butanoyl-, tert-Butanoyl-, n-Pentanoyl-, n-Hexanoyl-, n-Heptanoyl-, n-Octanoyl-, n-Nonanoyl- und n-Decanoyl-Gruppe.

Gemäß einer bevorzugten Ausführungsform der Erfindung ist R² eine Alkylgruppe mit 1 bis 18 Kohlenstoffatomen.

Gemäß einer weiteren bevorzugten Ausführungsform der Erfindung weist das Gemisch (A) die folgende Zusammensetzung auf:
35 bis 99,8 Gew.-% des Alkylacrylats oder -methacrylats (a),
0,2 bis 5 Gew.-% der Verbindung (b) und
0 bis 60 Gew.-% des ersten Monomeren (c),
die bevorzugten Bereiche sind:
36 bis 99,9 Gew.-% (a),
0,1 bis 4 Gew.-% (b), und
0 bis 60 Gew.-% (c),
wobei alle Angaben in Gew.-% auf die Gesamtmenge des Gemischs (A) bezogen sind.

Der Kautschuk (B) hat vorzugsweise eine Glastemperatur von weniger als 0 °C, bevorzugt weniger als -10 °C, wobei die Bestimmung der Glastemperatur mittels DSC nach ASTM 3418 erfolgt. Der Kautschuk weist damit die erforderliche Weichheit auf. Die Glastemperatur kann dabei entweder durch Verwendung eines Acrylats oder Methacrylats, dessen Polymeres die erwünschte Glastemperatur aufweist, oder durch Verwendung eines Gemisches von Acrylaten oder Methacrylaten die verschiedene Längen der Seitenketten (R², in Formel I) aufweisen, eingestellt werden. Diese Einstellung der Glastemperatur beruht darauf, daß die Glastemperatur von Acrylat- und Methacrylatpolymeren mit zunehmender Länge der Seitenkette zunächst abnimmt, dann ein Minimum durchläuft und schließlich wieder zunimmt. Das Minimum liegt bei einer Seitenkette von etwa 7 Kohlenstoffatomen für Polyacrylate und von 10 für Polymethacrylate. Dieser allgemeine Bereich für die Länge der Seitenketten R² ist daher bevorzugt. Die hergestellte kautschukmodifizierte Formmasse (D) enthält 1 bis 60 Gew.-%, vorzugsweise 5 bis 40 Gew.-%, des Kautschuks (B). Die Obergrenze ergibt sich daraus, daß die Formmasse trotz der eingebetteten Domänen des Kautschuks eine ausreichende Festigkeit aufweisen muß. Die Untergrenze wird im wesentlichen dadurch bestimmt, daß bei der Deformation ausreichend Energie aufgenommen werden muß.

Gemäß einer weiteren bevorzugten Ausführungsform der Erfindung wird als Alkylacrylat oder -methacrylat (a) n-Butylacrylat oder Ethylhexylacrylat verwendet.

Beispiele für Verbindungen (b) der Formel (II) sind Acrylamid-N-alkylol- und Methacrylamid-N-alkylol-verbindungen, wie Acrylamid-methylolmethylether, N-Methylol-acrylamid, Methacrylamid-methylolmethylether, N-Methylol-methacrylamid, Methacrylamid-N-methylolbutylether und Methacrylamid-N-methyolacetat.

Beispiele für erste Monomere (c) sind Verbindungen mit zwei Doppelbindungen, wie Divinylbenzol, Allylmethacrylat und Butandioldiacrylat, Verbindungen mit nur einer Doppelbindung, wie substituiertes oder unsubstituiertes Styrol, Ethylen und Methacrylsäure-Derivate wie Methacrylamid, sowie Verbindungen, die Gruppen enthalten, die bei thermischer Zersetzung Radikale bilden, d.h. Verbindungen mit Peroxigruppen, Diazogruppen oder labilen C-C-Bindungen.

Beispiele für zweite Monomere (d) sind Styrol, α-Methylstyrol, kernsubstituierte Styrole mit Halogen- und/oder aliphatischen Kohlenwasserstoffgruppen, Acrylnitril, Methacrylamid, Methylmethacrylat, Maleinsäureanhydrid, N-Phenylmaleinimid und N-Vinylmaleinimid, vorzugsweise Styrol der Formel 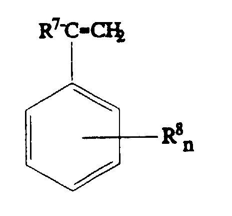 in der in der R⁷ und R⁸, die gleich und verschieden sein können, Wasserstoff und Alkyl mit 1-8 C-Atomen und n Werte von 0 bis 4 bedeuten, und Acrylnitril. Nach dem erfindungsgemäßen Verfahren werden demnach insbesondere ASA-Formmassen hergestellt.

In der dritten Stufe des erfindungsgemäßen Verfahrens kann die Polymerisation entweder durchgehend in Lösung oder in Masse durchgeführt werden oder nach einem Umsatz von mindestens 15% als Suspensionspolymerisation weiter geführt werden.

Die Polymerisation wird bei einer Temperatur von 0°C bis 200°C, bevorzugt 50°C bis 160°C durchgeführt. Alle gängigen Polymerisationsverfahren können verwendet werden, jedoch ist die Polymerisation mit freien Radikalen bevorzugt.

Die Abmischungen können Additive wie Schmiermittel, Antioxidanzien, Farbstoffe, Glasfasern und/oder Füllstoffe enthalten.

Die Kautschuke kommen in der Formmasse als Teilchen mit einem Durchmesser zwischen 0,1 und 20 µm, bevorzugt zwischen 0,1 und 10 µm, in der Polymermatrix vor. Bevorzugt werden bi- oder trimodale Verteilungen. Die Kautschukteilchen liegen im Form von Kapseln, Stäbchen, Tropfen, Labyrinthen, Zellen, Knäueln, Schalen, Stäbchenclustern oder Tropfenclustern vor. Jedoch werden auch Teilchen, die aus mehreren kugelförmigen Teilchen bestehen, beobachtet. Bevorzugt werden Zellen oder der letztgenannte Typ. Die genannten Teilchenformen sind in A. Echte, Advances in Chemical Serials, 222, S. 29, 1989, beschrieben.

Aus den Kautschuken können Abmischungen mit anderen Kunststoffen hergestellt werden, die bis zu 65 Gew.-% dieser Kunststoffe enthalten. Beispiele für geeignete Kunststoffe sind Polycarbonate, Polyphenylenether, Polymethylmethacrylat, Polyester und Polyamide.

Die Erfindung wird im folgenden anhand besonders bevorzugter Ausführungsbeispiele näher beschrieben.

### Beispiel

In den Beispielen werden die folgenden Verbindungen verwendet:

Cyclohexan, n-Butylacrylat, N-Methylolmethacrylamid (M-AMOL), Acrylnitril und Styrol sind Produkte der BASF und werden ohne weitere Reinigung verwendet.

Luviskol® K 90 stellt ebenfalls ein Produkt der BASF dar und ist ein Polyvinylpyrrolidon mit einem K-Wert von 90, gemessen 1%ig in Wasser bei 25°C. Die Messung des K-Werts wird in Cellulose Chemie, 13, 1932, S. 358 bis 364, beschrieben.

Allylmethacrylat wurde von der Firma Fluka, Tetra-Natrium-di-phosphat von der Firma Merk, Azobisisobutyronitril von der Firma Akzo Chemicals und Dicumylperoxid von der Firma Peroxid Chemie bezogen.

Als Stabilisator wurde 3-(3,5-Di-tert.-butyl-4-hydroxy-phenyl)-propionsäureoctadecylester verwendet, ein phenolisches Antioxidans, das unter der Bezeichnung Irganox® 1076 von der Firma Ciba Geigy vertrieben wird.

### Versuch 1 (Vergleich)

In einen Kolben wurden 397 g n-Butylacrylat, 750 g Cyclohexan, 545 mg 2,2'-Azobis-isobutyronitril eingefüllt, und unter Stickstoff und Rühren auf 75°C erhitzt. Nach 5 Minuten Anspringzeit wurde über 4 Stunden ein Gemisch aus 4,68 g Allylmethacrylat und 103 g n-Butylacrylat zudosiert. Nach Ende des Zulaufs wurde mit 0,12 Gew.-%, bezogen auf den gesamten Ansatz, Irganox 1076 versetzt und danach gekühlt.

In einem Rotationsverdampfer wurde unter Vakuum das Cyclohexan entfernt und gegen Styrol ausgetauscht und dann mit Acrylnitril aufgestockt, um eine Mischung aus 69,2 Gew.-% Styrol, 23 Gew.-% Acrylnitril und 7,8 Gew.-% Kautschuk zu ergeben.

Nach Zugabe von 0,075 Gew.-% Benzoylperoxid, 0,07 Gew.-% t-Dodecylmercaptan und 0,12 Gew.-% Irganox 1076, alle Angaben bezogen auf die Gesamtmasse der Lösung, wurde die Lösung in einen 5 1-Kessel eingefüllt und unter Stickstoff und Rühren auf 86°C erhitzt. Bei einem Umsatz von ca. 40% erfolgte die Zugabe von einem Teil, bezogen auf ein Teil Polymerlösung, einer wäßrigen Lösung aus 1% Luviskol K 90, 0,1% Tetra-natrium-di-phosphat und 0,1 % Dicumylperoxid. Der Ansatz wurde wie folgt auspolymerisiert:
3 Stunden bei 100°C
3 Stunden bei 130°C
6 Stunden bei 140°C.

Danach wurde gekühlt, das Polymer abfiltriert und getrocknet.

### Versuche 2 und 3 (erfindungsgemäß)

Versuch 1 wurde wiederholt, wobei in den Kautschuk 0,5 Gew.-% (Versuch 2) bzw. 1,0 Gew.-% (Versuch 3) N-Methylolmethacrylamid einpolymerisiert wurden. Das N-Methylolmethacrylamid wurde dabei zu dem Zulauf des Gemisches aus n-Butylacrylat und Allylmethacrylat zugegeben.

Die in den Versuchen 1 bis 3 erhaltenen Formmassen wurden bei 240°C Schmelztemperatur und 60°C Formtemperatur zu Kleinnormstäbchen gespritzt. An diesen Formteilen wurden die Schlagzähigkeit nach DIN 53453-n, Ausgabe 5/75, die Kerbschlagzähigkeit nach DIN 53453-k, Ausgabe 5/75, und die Lochkerbschlagzähigkeit nach DIN 53753-L-3-0, Ausgabe 4/81, gemessen.

Die Ergebnisse sind in der folgenden Tabelle 1 wiedergegeben:

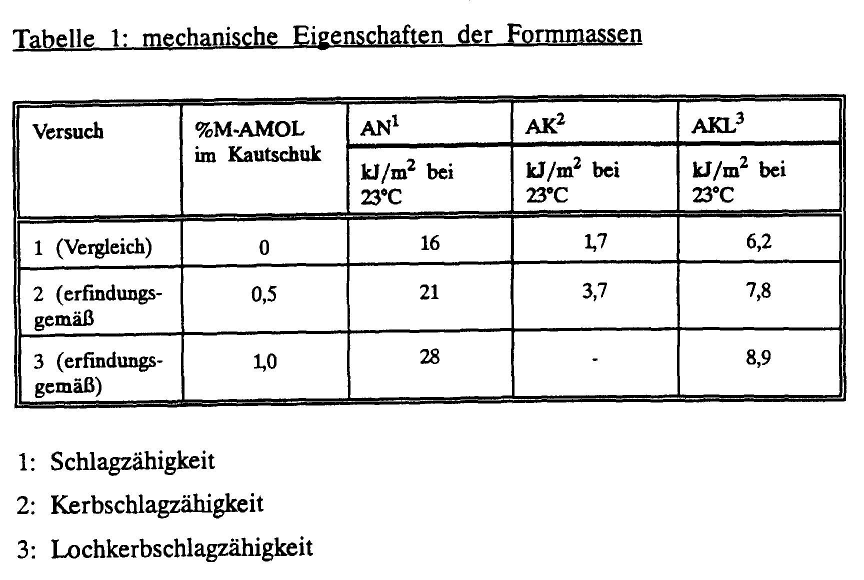

Wie ersichtlich, bringt die Zugabe von N-Methalolmethacrylamid eine Verbesserung der mechanischen Eigenschaften der Formmassen.

## Patentansprüche

1. Verfahren zur Herstellung von kautschukmodifizierten Formmassen,
**dadurch gekennzeichnet, daß** in einer ersten Stufe ein erstes Gemisch (A), das zumindest ein Alkylacrylat oder -methacrylat (a) der allgemeinen Formel (I) 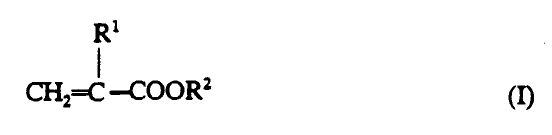 in der R¹ ein Wasserstoffatom oder eine Methylgruppe und R² eine Alkylgruppe mit 1 bis 32 Kohlenstoff-Atomen bedeutet, eine Verbindung (b) der allgemeinen Formel (II) 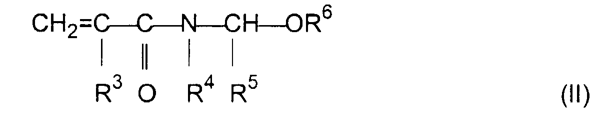 in der R³ ein Wasserstoffatom oder eine Methylgruppe, R⁴ ein Wasserstoffatom oder eine Alkylgruppe mit 1 bis 8 Kohlenstoff-Atomen, R⁵ ein Wasserstoffatom oder eine Methylgruppe und R⁶ ein Wasserstoffatom, eine Alkylgruppe mit 1 bis 10 Kohlenstoff-atomen, vorzugsweise Wasserstoff bedeutet, und ggf. ein erstes Monomeres (c) oder mehrere enthält, mit freien Radikalen zu einem Kautschuk (B) polymerisiert wird,
in einer zweiten Stufe der entstandene Kautschuk (B) unter Zugabe eines oder mehrerer zweiter Monomere (d) in diesen unter Bildung eines zweiten Gemischs (C) gelöst oder gequollen wird und
in einer dritten Stufe das gebildete zweite Gemisch (C) mit freien Radikalen zu der kautschukmodifizierten Formmasse (D) polymerisiert wird.

2. Verfahren nach Anspruch 1, dadurch gekennzeichnet, daß ein Alkylacrylat oder -methacrylat (a) der allgemeinen Formel (I) nach Anspruch 1 verwendet wird, bei dem R² eine Alkylgruppe mit 1 bis 18 Kohlenstoff-Atomen bedeutet.

3. Verfahren nach Anspruch 1 oder 2, dadurch gekennzeichnet, daß das Gemisch (A) folgende Zusammensetzung aufweist:
30 bis 99,8 Gew.-% des Alkylacrylat oder -methacrylats (a),
0,2 bis 10 Gew.-% der Verbindung (b) und
0 bis 60 Gew.-% des ersten Monomeren (c),
wobei alle Angaben in Gew.-% auf die Gesamtmenge des Gemischs (A) bezogen sind.

4. Verfahren nach einem der Ansprüche 1 bis 3, dadurch gekennzeichnet, daß Kautschukformmassen (D) hergestellt werden, die 1 bis 60 Gew.- %, vorzugsweise 5 bis 40 Gew.-%, des Kautschuks (B), enthalten.

5. Verfahren nach einem der Ansprüche 1 bis 4, dadurch gekennzeichnet, daß als Alkylacrylat oder -methacrylat (a) n-Butylacrylat oder Ethylhexylacrylat verwendet wird.

6. Verfahren nach einem der Ansprüche 1 bis 5, dadurch gekennzeichnet, daß in der ersten Stufe eine Verbindung (b) der allgemeinen Formel (II) nach Anspruch 1 verwendet wird, in der R³ ein Wasserstoffatom oder eine Methylgruppe, R⁴ ein Wasserstoffatom, R⁵ ein Wasserstoffatom und R⁶ ein Wasserstoffatom oder eine Alkylgruppe mit 1-10, vorzugsweise 1-6 C-Atomen bedeutet, insbesondere in der R⁶ ein Wasserstoffatom ist.

7. Verfahren nach einem der Ansprüche 1 bis 6, dadurch gekennzeichnet, daß als zweite Monomere (d) Styrol, Acrylnitril, Methacrylamid, Maleinsäureanhydrid oder N-Phenylmaleinimid verwendet werden.

8. Verfahren nach einem der Ansprüche 1 bis 7, dadurch gekennzeichnet, daß als erstes Monomeres (c) ein solches, das zwei oder mehr polymerisierbare Doppelbindungen enthält, verwendet wird.

9. Verfahren nach einem der Ansprüche 1 bis 8, dadurch gekennzeichnet, daß ein weiteres Monomeres (c) verwendet wird, das Gruppen enthält, die bei thermischer Zersetzung Radikale bilden.

10. Verfahren nach einem der Ansprüche 1 bis 9, dadurch gekennzeichnet, daß in der dritten Stufe die Polymerisation nach einem Umsatz von mindestens 15% als Suspensionspolymerisation weiter geführt wird.

11. Kautschukmodifizierte Formmasse, dadurch gekennzeichnet, daß sie nach einem der Verfahrensansprüche 1 bis 10 hergestellt ist und in einer Matrix eingebettete Teilchen des Kautschuks (B) enthält.

12. Kautschukmodifizierte Formmasse nach Anspruch 11, dadurch gekennzeichnet, daß die Kautschukteilchen in Form von Kapseln, Stäbchen, Tropfen, Labyrinthen, Zellen, Knäueln, Schalen, Stäbchenclustern oder Tropfenclustern vorliegen.

13. Kautschukmodifizierte Formmasse nach Anspruch 11 oder 12, dadurch gekennzeichnet, daß die Kautschukteilchen einen Durchmesser von 0,1 bis 20 µm aufweisen.

## Claims

1. A process for the preparation of a rubber-modified molding material, wherein in a first stage, a first mixture (A) which contains at least one alkyl acrylate or methacrylate (a) of the formula (I) 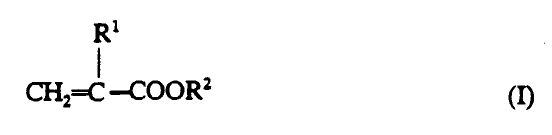 where R¹ is hydrogen or methyl and R² is alkyl of 1 to 32 carbon atoms, a compound (b) of the formula (II) 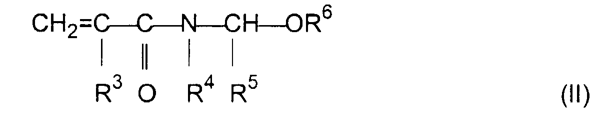 where R³ is hydrogen or methyl, R⁴ is hydrogen or alkyl of 1 to 8 carbon atoms, R⁵ is hydrogen or methyl and R⁶ is hydrogen or alkyl of 1 to 10 carbon atoms, preferably hydrogen, and, if required, a first monomer (c) or a plurality thereof is polymerized with free radicals to give a rubber (B),
in a second stage, the resulting rubber (B), with the addition of one or more second monomers (d), is dissolved or swollen therein to form a second mixture (C), and in a third stage, the second mixture (C) formed is polymerized with free radicals to give the rubber-modified molding material (D).

2. A process as claimed in claim 1, wherein an alkyl acrylate or methacrylate (a) of the formula (I), where R² is alkyl of 1 to 18 carbon atoms, as claimed in claim 1, is used.

3. A process as claimed in claim 1 or 2, wherein the mixture (A) has the following composition:
from 30 to 99.8% by weight of the alkyl acrylate or methacrylate (a),
from 0.2 to 10% by weight of the compound (b) and
from 0 to 60% by weight of the first monomer (c),
all data in % by weight being based on the total amount of the mixture (A).

4. A process as claimed in any of claims 1 to 3, wherein a rubber molding material (D) which contains from 1 to 60, preferably from 5 to 40, % by weight of the rubber (B) is prepared.

5. A process as claimed in any of claims 1 to 4, wherein the alkyl acrylate or methacrylate (a) used is n-butyl acrylate or ethylhexyl acrylate.

6. A process as claimed in any of claims 1 to 5, wherein the compound (b) used in the first stage is one of the formula (II), as claimed in claim 1, where R³ is hydrogen or methyl, R⁴ is hydrogen, R⁵ is hydrogen and R⁶ is hydrogen or alkyl of 1 to 10, preferably 1 to 6, carbon atoms, in particular where R⁶ is hydrogen.

7. A process as claimed in any of claims 1 to 6, wherein styrene, acrylonitrile, methacrylamide, maleic anhydride or N-phenylmaleimide is used as second monomer (d).

8. A process as claimed in any of claims 1 to 7, wherein the first monomer (c) used is one which contains two or more polymerizable double bonds.

9. A process as claimed in any of claims 1 to 8, wherein a further monomer (c) which contains groups which form free radicals on thermal decomposition is used.

10. A process as claimed in any of claims 1 to 9, wherein, in the third stage, the polymerization is continued as a suspension polymerization after conversion of at least 15%.

11. A rubber-modified molding material, which is prepared as claimed in any of the process claims 1 to 10 and contains particles of the rubber (B) which are embedded in a matrix.

12. A rubber-modified molding material as claimed in claim 11, wherein the rubber particles are in the form of capsules, rods, drops, labyrinths, cells, coils, shells, rod clusters or drop clusters.

13. A rubber-modified molding material as claimed in claim 11 or 12, wherein the rubber particles have a diameter of from 0.1 to 20 µm.

## Revendications

1. Procédé de fabrication de masses à mouler modifiées par du caoutchouc,
caractérisé en ce que
au cours d'une première étape, on polymérise un premier mélange (A) qui contient au moins un acrylate ou un méthacrylate d'alkyle (a) de la formule générale (I) 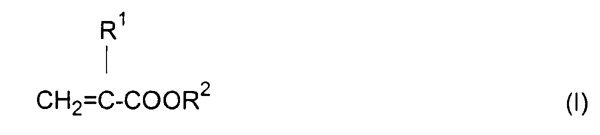 dans laquelle R¹ représente un atome d'hydrogène ou le radical méthyle et R² représente un radical alkyle comportant de 1 à 32 atomes de carbone, un composé (b) de la formule générale (II) 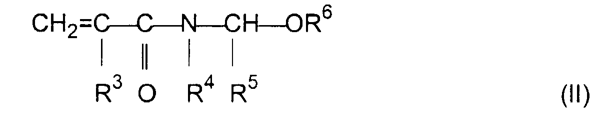 dans laquelle R³ représente un atome d'hydrogène ou le radical méthyle, R⁴ représente un atome d'hydrogène ou un radical alkyle comportant de 1 à 8 atomes de carbone, R⁵ représente un atome d'hydrogène ou le radical méthyle et R⁶ représente un atome d'hydrogène, un radical alkyle comportant de 1 à 10 atomes de carbone, de préférence, un atome d'hydrogène et éventuellement un premier monomère (c) ou plusieurs de ceux-ci, en un caoutchouc (B) à l'aide de radicaux libres,
au cours d'une seconde étape, on dissout ou gonfle le caoutchouc (B) ainsi obtenu sous addition d'un ou plusieurs seconds monomères (d), sous formation d'un second mélange (C) et
au cours d'une troisième étape, on polymérise le second mélange (C) ainsi obtenu avec des radicaux libres en la masse à mouler modifiée par un caoutchouc (D).

2. Procédé suivant la revendication 1, caractérisé en ce que l'on utilise un acrylate ou un méthacrylate d'alkyle (a) de la formule générale (I) suivant la revendication 1, dans lequel R² représente un groupe alkyle qui comporte de 1 à 18 atomes de carbone.

3. Procédé suivant la revendication 1 ou 2, caractérisé en ce que le mélange (A) présente la composition suivante :
30 à 99,8% en poids de l'acrylate ou du méthacrylate d'alkyle (a),
0,2 à 10% en poids du composé (b) et
0 à 60% en poids du premier monomère (c),
où toutes les indications en pourcentages pondéraux se rapportent à la quantité totale du mélange (A).

4. Procédé suivant l'une quelconque des revendications 1 à 3, caractérisé en ce que l'on fabrique des masses à mouler à base de caoutchouc (D) qui contiennent de 1 à 60% en poids, de préférence, de 5 à 40% en poids, du caoutchouc (B).

5. Procédé suivant l'une quelconque des revendications 1 à 4, caractérisé en ce que, à titre d'acrylate ou de méthacrylate d'alkyle (a), on utilise l'acrylate de n-butyle ou l'acrylate d'éthylhexyle.

6. Procédé suivant l'une quelconque des revendications 1 à 5, caractérisé en ce que, au cours de la première étape, on utilise un composé (b) de la formule générale (II) suivant la revendication 1, dans laquelle R³ représente un atome d'hydrogène ou le radical méthyle, R⁴ représente un atome d'hydrogène, R⁵ représente un atome d'hydrogène et R⁶ représente un atome d'hydrogène ou un radical alkyle comportant de 1 à 10, de préférence, 1 à 6, atomes de carbone, plus particulièrement, dans laquelle R⁶ représente un atome d'hydrogène.

7. Procédé suivant l'une quelconque des revendications 1 à 6, caractérisé en ce que l'on utilise, à titre de second monomère (d), le styrène, l'acrylonitrile, le méthacrylamide, l'anhydride de l'acide maléique, ou le N-phénylmaléimide.

8. Procédé suivant l'une quelconque des revendications 1 à 7, caractérisé en ce que, à titre de premier monomère (c), on en utilise un qui contient deux ou plus de deux doubles liaisons polymérisables.

9. Procédé suivant l'une quelconque des revendications 1 à 8, caractérisé en ce que l'on utilise un autre monomère (c) qui contient des groupes qui forment des radicaux par décomposition thermique.

10. Procédé suivant l'une quelconque des revendications 1 à 9, caractérisé en ce que, au cours de la troisième étape, on poursuit la polymérisation après une conversion d'au moins 15%, sous forme d'une polymérisation en suspension.

11. Masse à mouler modifiée par du caoutchouc, caractérisée en ce qu'elle a été préparée par le procédé suivant l'une quelconque des revendications 1 à 10 et en ce qu'elle contient des particules du caoutchouc (B) noyées dans une matrice.

12. Masse à mouler modifiée par un caoutchouc suivant la revendication 11, caractérisée en ce que les particules du caoutchouc se présentent sous la forme de capsules, de bâtonnets, de gouttes, de labyrinthes, de cellules, de pelotes, de coquilles, d'amas de bâtonnets ou d'amas de gouttes.

13. Masse à mouler modifiée par un caoutchouc suivant la revendication 11 ou 12, caractérisée en ce que les particules du caoutchouc présentent un diamètre de 0,1 à 20 µm.
